# EUROPEAN PATENT SPECIFICATION

(11) **EP 4 135 280 B1**
(45) Date of publication and mention of the grant of the patent: **24.07.2024**
(21) Application number: 20933357.4
(22) Date of filing: 30.04.2020
(51) Int. Cl.: H04L 69/22

(54) **MESSAGE PARSING METHOD AND APPARATUS**
NACHRICHTENPARSINGVERFAHREN UND -VORRICHTUNG
PROCÉDÉ ET APPAREIL D'ANALYSE DE MESSAGE

(43) Date of publication of application: 15.02.2023
(73) Proprietor: Huawei Technologies Co., Ltd., Shenzhen, Guangdong 518129 (CN)
(72) Inventor: ROITSHTEIN, Amir, Shenzhen, Guangdong 518129 (CN); BICK, Yoni, Shenzhen, Guangdong 518129 (CN); ARONOV, Irena, Shenzhen, Guangdong 518129 (CN); ADMON, Itay, Shenzhen, Guangdong 518129 (CN); SHI, Yongliang, Shenzhen, Guangdong 518129 (CN)
(74) Representative: Goddar, Heinz J.
(86) International application number: PCT/CN2020/088312
(87) International publication number: WO 2021/217588

(56) References cited:
- CN-A- 101 022 405
- CN-A- 105 554 002
- CN-A- 109 218 417
- CN-A- 110 912 859
- US-A1- 2013 215 906
- US-A1- 2016 269 285
- ZOLFAGHARI HESAM ET AL: "A custom processor for protocol-independent packet parsing", MICROPROCESSORS AND MICROSYSTEMS, IPC BUSINESS PRESS LTD. LONDON, GB, vol. 72, 14 October 2019 (2019-10-14), XP086043586, ISSN: 0141-9331, [retrieved on 20191014], DOI: 10.1016/J.MICPRO.2019.102910
- GLEN GIBB ET AL: "Design principles for packet parsers", ARCHITECTURES FOR NETWORKING AND COMMUNICATIONS SYSTEMS, IEEE PRESS, 445 HOES LANE, PO BOX 1331, PISCATAWAY, NJ 08855-1331 USA, 21 October 2013 (2013-10-21), pages 13 - 24, XP058058151, ISBN: 978-1-4799-1640-5, DOI: 10.1109/ANCS.2013.6665172

## Description

### TECHNICAL FIELD

Embodiments of this application relate to the electronic information field, and in particular, to a packet parsing method and apparatus.

### BACKGROUND

The Transmission Control Protocol/Internet Protocol (TCP/IP) model is a basis of a current Internet Protocol (IP) network. According to the TCP/IP model, an entire data communication task may be divided into different function layers, and each layer corresponds to a different function and a different protocol type. It may be understood that when data is transmitted and/or processed at different layers, a protocol type of a corresponding layer needs to be matched. Data specified by different protocol types includes different information such as a location of a specific field. Therefore, to perform transmission and/or processing at different layers, the data needs to be able to match a plurality of different protocol types.

Generally, the data may be transmitted and processed in a form of a packet (message). To match the plurality of protocol types, a packet can include a plurality of packet headers and packet data payloads. Each of the plurality of packet headers corresponds to a protocol type of a layer. The packet header may include a plurality of control fields. A corresponding function may be implemented by using the plurality of control fields, for example, extracting corresponding data from a packet data payload.

When data is transmitted and processed by using the foregoing packet, a packet parsing engine may be configured to separately parse the plurality of packet headers included in the packet, to obtain protocol types respectively corresponding to the plurality of packet headers and an offset of each packet header in the packet. Therefore, when a control field of a protocol type needs to be extracted, a specific location of the key field in the packet header may be determined according to an offset of a packet header of a corresponding protocol type, and the key field is extracted. In this way, data can be transmitted and processed at different layers.

It can be learned that packet parsing is essential to data transmission and processing. Flexible and fast packet parsing makes data transmission and processing more efficient.

XP086043586 proposes new methods for protocol-independent packet parsing.

US 2013/215906 A1 relates to methods and devices for reconfigurable parsing of data packet headers in a network.

XP058058151 relates to design principles for packet parsers.

### SUMMARY

Embodiments of this application provide a packet parsing method and apparatus, and relate to the field of electronic information, to resolve a problem in the conventional technology that a special type of packet header cannot be accurately parsed through proper programming during packet parsing.

To achieve the foregoing objectives, the following technical solutions are used in embodiments of this application.

According to a first aspect, a packet parsing method is provided. The method includes: receiving a packet, where the packet includes at least a first packet header and a second packet header, and the second packet header is a next-level packet header of the first packet header; obtaining a configuration of the first packet header, where the configuration of the first packet header includes a protocol type of the first packet header; obtaining first configuration information from the first packet header based on the configuration of the first packet header, where the first configuration information includes a next packet header field (NHF) and an additional field of the first packet header; searching a first table based on the additional field to obtain a protocol type corresponding to the additional field, and searching a second table based on the NHF to obtain a protocol type corresponding to the NHF; when there is the protocol type corresponding to the additional field in the first table, obtaining a protocol type of the second packet header based on the protocol type corresponding to the additional field; and when there is no protocol type corresponding to the additional field in the first table, obtaining the protocol type of the second packet header based on the protocol type corresponding to the NHF.

Based on this solution, a configuration of the second packet header is determined based on the configuration of the first packet header, improving flexibility. For example, when the second packet header is a packet header of a special type, the protocol type of the second packet header may be determined based on a target field in the first packet header. When the second packet header is a packet header of a common protocol type, the protocol type of the second packet header may be determined based on the NHF in the first packet header. Therefore, according to the method, parsing of a plurality of protocol types of the second packet header can be supported, and a packet header of a special protocol type can be parsed. For example, in an implementation of this solution, the first table may store a correspondence between the additional field and the protocol type. Therefore, a protocol type corresponding to the additional field may be directly obtained through query based on the additional field. In some other implementations, the first table may also store a correspondence between the additional field and a protocol type identifier. For example, an identifier 1 corresponds to a protocol type 1, and an identifier 2 corresponds to a protocol type 2. Therefore, the protocol type identifier corresponding to the additional field may be obtained by searching the first table, and a corresponding protocol type is further determined based on the identifier. Certainly, in some other implementations, the first table further stores a correspondence between an additional field identifier and the protocol type identifier, or a correspondence between the additional field identifier and the protocol type. Function implementation thereof is similar to that in the foregoing example, and details are not described herein again. Similarly, the correspondence stored in the second table may also be any one of the foregoing three examples, for example, a correspondence between the NHF and the protocol type, a correspondence between the NHF and the protocol type identifier, and a correspondence between a NHF identifier and the protocol type identifier. It should be noted that, in this embodiment of this application, a protocol type that is determined based on the first table and that corresponds to the additional field may correspond to the protocol type of the second packet header. To be specific, in this implementation, the protocol type corresponding to the additional field in the first table may be used as the protocol type of the second packet header. In some other implementations, the protocol type that corresponds to the additional field and that is determined based on the first table may also have a function of correcting the protocol type of the first packet header. In this implementation, the protocol type corresponding to the additional field in the first table may be used to update the protocol type of the first packet header, and determine the protocol type of the second packet header based on the updated protocol type of the first packet header. The implementation herein is merely an example, and a specific method thereof is described in detail in the following description.

In some possible designs, the configuration of the first packet header further includes an offset of the first packet header, and the first configuration information further includes length information of the first packet header. The method further includes: obtaining an offset of the second packet header based on the length information of the first packet header and the offset of the first packet header. Based on this solution, a method is provided for determining an offset of a next packet header level by level based on the first packet header in the solutions provided in this application.

In some possible designs, the obtaining a configuration of the first packet header includes: when the first packet header is a first-level packet header of the packet, obtaining the configuration of the first packet header based on a physical port number used to receive the packet; and when the first packet header is not the first-level packet header of the packet, obtaining second configuration information based on a configuration of a previous-level packet header of the first packet header. The second configuration information includes an NHF of the previous-level packet header, an additional field of the previous-level packet header, and length information of the previous-level packet header. The additional field is used to determine the configuration of the first packet header, and obtain the configuration of the first packet header based on the second configuration information. Based on this solution, a method for determining the protocol type of the first-level packet header is provided. In other words, the protocol type and the offset of the first-level packet header are determined based on a correspondence between physical port numbers. In addition, a method is also provided for determining the protocol type and the offset of the first packet header in a scenario in which the first packet header is not the first-level packet header. After the protocol type of the first-level packet header is determined, the packet header may be parsed level by level.

In some possible designs, the obtaining first configuration information based on a configuration of the first packet header includes: searching a third table based on the protocol type of the first packet header to obtain first location information, where the first location information indicates a location of the additional field in the first packet header, and extracting the additional field from the first packet header based on the first location information; searching a fourth table based on the protocol type of the first packet header to obtain second location information, where the second location information indicates a location of the NHF in the first packet header, and extracting the NHF from the first packet header based on the second location information; and searching a fifth table based on the protocol type of the first packet header to obtain third location information, where the third location information indicates a location of length calculation configuration information in the first packet header, and calculating to obtain the length information of the first packet header based on the length calculation configuration information. Based on this solution, locations corresponding to the NHF, the additional field, and a packet length calculation method in the first packet header can be separately determined based on the third table, the fourth table, and the fifth table. A corresponding field is extracted based on the information, to obtain the NHF, the additional field, and the length calculation configuration information.

In some possible designs, the searching a second table based on the NHF to obtain a protocol type corresponding to the NHF includes: performing ternary content addressable memory (TCAM) searching on the second table based on the NHF to obtain the protocol type corresponding to the NHF. Based on this solution, when the second packet header and/or the first packet header are/is not packet headers of a special protocol type, TCAM searching may be performed by using the NHF to accurately obtain a corresponding protocol type. Because there is a solution in which TCAM searching is performed based on the NHF to determine the protocol type of the second packet header, the protocol type of the second packet header can be accurately obtained when the second packet header is not a packet header of a special protocol type. Therefore, a correspondence between the common protocol type and the additional field does not need to be stored in the first table. This can simplify the first table.

In some possible designs, the performing ternary content addressable memory (TCAM) searching on the second table based on the NHF to obtain the protocol type corresponding to the NHF includes: generating, based on the NHF, a search key corresponding to the NHF; obtaining an entry corresponding to the key in the second table; when there is the entry corresponding to the key in the second table, using a protocol type indicated by the entry as the protocol type corresponding to the NHF; and when there are a plurality of entries corresponding to the key in the second table, determining a target entry from the plurality of entries through priority addressing, and using a protocol type indicated by the target entry as the protocol type corresponding to the NHF. Based on this solution, a specific manner is provided, to generate the key based on the NHF and perform TCAM searching, to obtain a corresponding searching result, and further determine a corresponding protocol type. When there are a plurality of TCAM searching results, a correct search result may be determined based on priority addressing, and a corresponding protocol type may be determined.

In some possible designs, the method further includes: generating a packet descriptor (PHD) of the packet based on the configuration of the first packet header and a configuration of the second packet header. The configuration of the second packet header includes the protocol type and the offset that are of the second packet header. Based on this solution, a corresponding PHD is generated based on the configuration of the packet header in the packet, to extract a key field (for example, a corresponding control field in the packet header).

According to a second aspect, a packet parsing apparatus is provided, where the apparatus includes a receiving unit and an obtaining unit. The receiving unit is configured to receive a packet, where the packet includes at least a first packet header and a second packet header, and the second packet header is a next-level packet header of the first packet header. The obtaining unit is configured to obtain a configuration of the first packet header, where the configuration of the first packet header includes a protocol type of the first packet header. The obtaining unit is further configured to obtain first configuration information from the first packet header based on the configuration of the first packet header, where the first configuration information includes a next packet header field (NHF) and an additional field of the first packet header. The obtaining unit is further configured to: search a first table based on the additional field to obtain a protocol type corresponding to the additional field, and search a second table based on the NHF to obtain a protocol type corresponding to the NHF; when there is the protocol type corresponding to the additional field in the first table, obtain a protocol type of the second packet header based on the protocol type corresponding to the additional field; and when there is no protocol type corresponding to the additional field in the first table, obtain the protocol type of the second packet header based on the protocol type corresponding to the NHF.

In a possible design, the configuration of the first packet header further includes an offset of the first packet header, and the first configuration information further includes length information of the first packet header. The obtaining unit is further configured to obtain an offset of the second packet header based on the length information of the first packet header and the offset of the first packet header.

In a possible design, the obtaining unit is further configured to: when the first packet header is a first-level packet header of the packet, obtain the configuration of the first packet header based on a physical port number used to receive the packet; and when the first packet header is not the first-level packet header of the packet, obtain second configuration information based on a configuration of a previous-level packet header of the first packet header. The second configuration information includes an NHF of the previous-level packet header, an additional field of the previous-level packet header, and length information of the previous-level packet header. The additional field is used to determine the configuration of the first packet header, and obtain the configuration of the first packet header based on the second configuration information.

In a possible design, the obtaining unit is further configured to: search a third table based on the protocol type of the first packet header to obtain first location information, where the first location information indicates a location of the additional field in the first packet header, and extract the additional field from the first packet header based on the first location information. The obtaining unit is further configured to: search a fourth table based on the protocol type of the first packet header to obtain second location information, where the second location information indicates a location of the NHF in the first packet header, and extract the NHF from the first packet header based on the second location information. The obtaining unit is further configured to: search a fifth table based on the protocol type of the first packet header to obtain third location information, where the third location information indicates a location of length calculation configuration information in the first packet header, and calculate to obtain the length information of the first packet header based on the length calculation configuration information.

In a possible design, the obtaining unit is further configured to perform ternary content addressable memory (TCAM) searching on the second table based on the NHF to obtain the protocol type corresponding to the NHF.

In a possible design, the obtaining unit is further configured to: generate, based on the NHF, a search key corresponding to the NHF; determine an entry corresponding to the key in the second table; when there is the entry corresponding to the key in the second table, use a protocol type indicated by the entry as the protocol type corresponding to the NHF; and when there are a plurality of entries corresponding to the key in the second table, determine a target entry from the plurality of entries through priority addressing, and use a protocol type indicated by the target entry as the protocol type corresponding to the NHF.

In a possible design, the apparatus further includes a generation unit, where the generation unit is configured to generate a packet descriptor (PHD) of the packet based on the configuration of the first packet header and a configuration of the second packet header. The configuration of the second packet header includes the protocol type and the offset that are of the second packet header.

### BRIEF DESCRIPTION OF DRAWINGS

FIG. 1 is a schematic composition diagram of a packet;
FIG. 2 is a schematic composition diagram of a packet parsing engine according to an embodiment of this application;
FIG. 3 is a schematic diagram of logic of a packet parsing method according to an embodiment of this application;
FIG. 4 is a schematic flowchart of a packet parsing method according to an embodiment of this application;
FIG. 5 is a schematic diagram of logic of searching for location information according to an embodiment of this application;
FIG. 6 is a schematic diagram of a corresponding information extraction method according to an embodiment of this application;
FIG. 7 is a schematic diagram of logic of TCAM searching according to an embodiment of this application;
FIG. 8 is a schematic diagram of TCAM searching according to an embodiment of this application;
FIG. 9 is another schematic diagram of logic of TCAM searching according to an embodiment of this application;
FIG. 10 is another schematic diagram of TCAM searching according to an embodiment of this application;
FIG. 11 is still another schematic diagram of logic of TCAM searching according to an embodiment of this application;
FIG. 12 is still another schematic diagram of TCAM searching according to an embodiment of this application;
FIG. 13 is a schematic diagram of logic of key field extracting according to an embodiment of this application;
FIG. 14 is a schematic composition diagram of a packet parsing apparatus according to an embodiment of this application; and
FIG. 15 is a schematic composition diagram of a chip system according to an embodiment of this application.

### DESCRIPTION OF EMBODIMENTS

Generally, data may be transmitted and processed at different layers in a form of a packet. To ensure that all layers having different protocol types can transmit and process the packet, the packet may include a plurality of packet headers. Different packet headers may correspond to different protocol types. In this way, after the packet is received, a corresponding layer may determine a location of data in the packet based on a packet header of a corresponding protocol type, to apply the data.

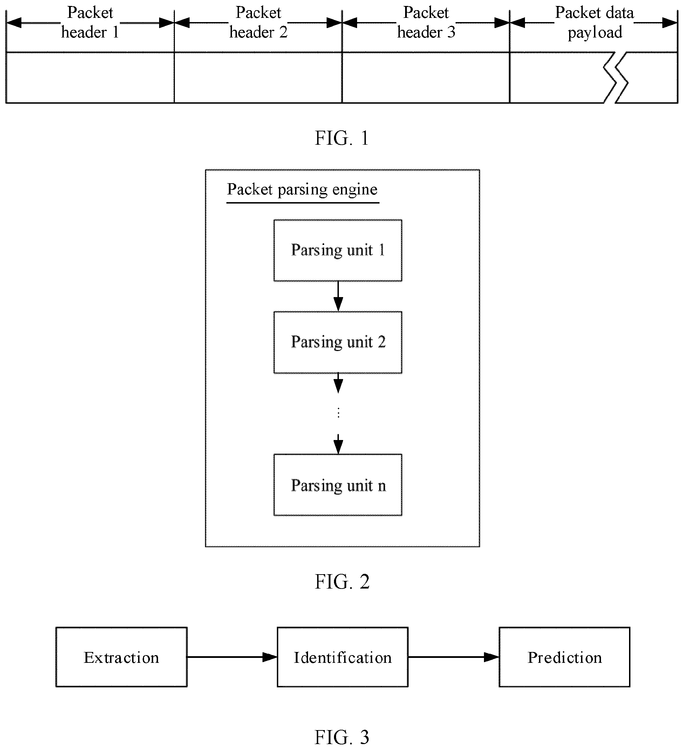

For example, FIG. 1 is a schematic composition diagram of a packet. As shown in FIG. 1, the packet may include a plurality of packet headers (a packet header 1, a packet header 2, and a packet header 3 shown in FIG. 1) and a packet data payload. Different packet headers may correspond to different protocol types. For example, the packet header 1 may correspond to the Ethernet protocol, the packet header 2 may correspond to the Internet Protocol version 4 (IPv4), and the packet header 3 may correspond to the Transmission Control Protocol (TCP). The packet data payload carries data information. After the packet is received, a corresponding layer (for example, a layer of a TCP protocol type) may parse the packet, to obtain protocol types of different packet headers (for example, the packet header 1, the packet header 2, and the packet header 3) and a location of a corresponding packet header in the packet. (that is, an offset). In this way, a location of a packet header (for example, the packet header 3) that matches a current Layer protocol type in the packet is determined, and then a location of a control field (or referred to as a key field) that needs to be used in the packet header is determined based on the packet header 3 and extracted. Generally, the packet header may be referred to as a first-level packet, a second-level packet, or the like of the packet based on a location of the packet header in the packet, for example, a sequence of physical locations corresponding to the packet header. For example, in the composition of the packet shown in FIG. 1, the packet header 1 may be referred to as a first-level packet, the packet header 2 may be referred to as a second-level packet, and the packet header 3 may be referred to as a third-level packet.

In the conventional technology, packet parsing may be performed by searching a preset table. For example, a protocol type of the first-level packet header in the packet may be determined based on a physical port number used to receive the packet. The preset table is searched for a related match item based on the protocol type of the first-level packet header, to obtain protocol types of the second-level packet header and subsequent packet headers. It can be learned that although the method can complete parsing of the packet based on the protocol type of the first-level packet header, by using this method, a combination of the protocol type of the first-level packet header and a protocol type of a subsequent packet header is fixed. As a result, the packet header in the packet cannot support a new protocol type. Therefore, an unknown protocol jump branch is not supported.

Therefore, when the packet includes a packet header of a protocol type that is not in the preset table, correct packet parsing cannot be implemented. A packet parsing engine having this feature may be referred to as a non-programmable packet parsing engine.

It should be noted that both a distribution structure of data in each packet header and a length of the packet header in the packet depend on the protocol type of the packet header. Each packet header may include a next packet header field (NHF), and the next packet header field may be used to indicate a protocol type of a next-level packet header of a current packet header. For example, in the packet header shown in FIG. 1, the packet header 1 may include an NHF, used to indicate that a protocol type of a next-level packet header (that is, the packet header 2) is TCP. However, if the current packet header is a packet header of a special protocol type, an error may occur in extraction of the NHF, and the NHF may not correctly indicate the protocol type of a next-level packet header. Therefore, packet parsing based on the NHF cannot identify a packet header of a special protocol type.

Embodiments of this application provide a packet parsing method and apparatus. Refer to an NHF included in a packet header. A protocol type and an offset of a next-level packet header are accurately determined based on a protocol type and an offset of a previous-level packet header. Parsing of a plurality of new protocols can be supported. In this way, a packet parsing process is flexible and programmable.

The following describes in detail a packet parsing method and apparatus provided in this embodiment of this application with reference to the accompanying drawings. In this embodiment of this application, the packet parsing apparatus may also be referred to as a packet parsing engine.

FIG. 2 is a schematic composition diagram of a packet parsing engine according to an embodiment of this application. The packet parsing engine may include one or more parsing slices (PS). For example, the packet parsing engine may include a parsing unit 1 to a parsing unit n shown in FIG. 2. Each parsing unit in the N parsing units may perform packet header parsing on a first-level packet header of a packet. Therefore, the N parsing units can complete parsing of a plurality of levels of packet headers of the packet in sequence. For example, the parsing unit 1 may parse the first-level packet header, and input a determined configuration of the first-level packet header to a parsing unit 2, so that the parsing unit 2 determines a configuration of a second-level packet header based on the configuration of the first-level packet header, and so on.

It may be understood that, in this embodiment of this application, the packet parsing engine shown in FIG. 2 may be separately disposed, to implement sequential parsing on the packet. Alternatively, a plurality of packet parsing engines may be disposed. In this way, each packet parsing engine may be configured to process a data flow corresponding to a packet, and the plurality of packet parsing engines may concurrently parse a plurality of different packets.

For example, when parsing the packet, the parsing unit is configured to determine the configuration of the first packet header in the packet. For example, the configuration may include a protocol type and an offset of the first packet header. The parsing unit may further extract an additional field and an NHF from the first packet header based on the protocol type of the first packet header, and calculate a length of the first packet header. The parsing unit may be further configured to search, based on the additional field, a preset table (for example, the first table), for a protocol type that matches the additional field, and use the protocol type as a protocol type of a next-level packet header (for example, a second packet header). When there is no protocol type that matches the additional field in the first table, the parsing unit may further perform ternary content addressable memory (TCAM) searching based on the NHF, to determine the protocol type of the second packet header. It should be noted that, in a specific implementation process, the parsing unit provided in this embodiment of this application may be implemented by using one or more of a field programmable gate array (FPGA), a programmable array logic (PLA), and/or an integrated circuit (for example, an integrated circuit (Application Specific Integrated Circuit, ASIC) used for a dedicated application). Certainly, a function of the parsing unit may also be implemented by using a component having an operation capability, such as a central processing unit (CPU), disposed in a device that needs to perform the packet parsing operation. This is not limited in this embodiment of this application.

In addition, one or more storage modules having a storage function may be further disposed in the packet parsing engine. The storage module may be configured to store tables required in a packet parsing process. In some embodiments, the storage module may provide a database (DB) that includes configurations corresponding to a large quantity of protocol types, and is shared by a plurality of parsing units. Therefore, when parsing packets including packet headers of different protocol types, different parsing units may select, from the DB, configurations required by the different parsing units as a search table of the different parsing units, to quickly and accurately parse the packets. For example, the search table may include tables such as a Database. Current State (DB.DC) used to search location information of the NHF, a Database. Range & Long Field Extraction (DB.RLFE) used to search location information of the additional field, and a Database. Length (DS.Len) used to search location information of length calculation configuration information.

A larger quantity of parsing units sharing a same storage module indicates a higher usage of data stored in the parsing engine, and correspondingly the storage module needs to have a high data processing and transmission capability. Therefore, in different implementations, a quantity of parsing units that share the same storage module may be flexibly selected based on a specific situation. For example, four parsing units may be used to contribute to one storage module (memory). Certainly, a configuration used for packet parsing may also be stored in a storage medium other than the packet parsing engine. When the parsing unit needs to use a corresponding configured table to parse the packet, the parsing unit may extract corresponding configuration information from the storage medium through an interface disposed on the packet parsing engine.

The packet parsing method provided in this embodiment of this application may be applied to the packet parsing engine shown in FIG. 2, to implement flexible and programmable packet parsing.

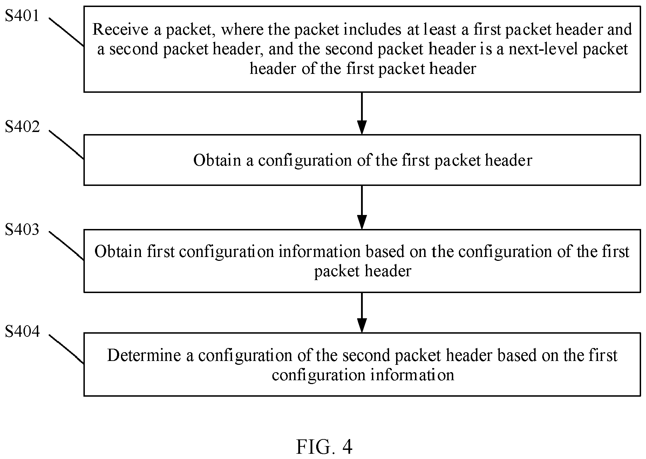

FIG. 3 is a schematic diagram of logic of a packet parsing method according to an embodiment of this application. As shown in FIG. 3, the packet parsing method may logically include three steps: extraction, identification, and prediction. Each of the N parsing units (for example, the parsing unit 1 to the parsing unit n) in FIG. 2 may parse the packet according to the method. The following describes the preceding three logical steps in detail. FIG. 4 is a schematic flowchart of a packet parsing method according to an embodiment of this application. As shown in FIG. 4, the method may include S401 to S404.

S401: Receive a packet, where the packet includes at least a first packet header and a second packet header, and the second packet header is a next-level packet header of the first packet header.

S402: Obtain a configuration of the first packet header.

In this embodiment of this application, a configuration of a packet header may include a protocol type of a corresponding packet header and an offset of the packet header. For example, the configuration of the first packet header may include a protocol type of the first packet header and an offset of the first packet header. In this embodiment of this application, the offset may be a physical location of a first byte of the first packet header in the packet, or may be a physical location of a specific byte included in the first packet header in the packet, or may be a location of a last byte of the first packet header in the packet. The following uses an example in which the offset of the first packet header is the physical location of the first byte of the first packet header in the packet.

For example, when the first packet header is a first-level packet of the packet, the parsing unit may determine the protocol type of the first packet header and the offset of the first packet header based on information about a physical port that receives the packet. For example, a parsing unit may determine the protocol type of the first packet header based on a table including a correspondence between port information and the protocol type.

It may be understood that, because the first packet header is the first-level packet of the packet, the offset of the first packet header is equal to start locations of all packet headers in the first packet header. For example, when the packet header in the packet starts from the first byte, the offset of the first packet header is 0.

When the first packet header is not the first-level packet of the packet, that is, the first packet header is a next-level packet header of another packet header, a method for determining the configuration of the first packet header is similar to the method for determining a configuration of a second packet header in this embodiment of this application. A specific method thereof is described in detail in the following description, and details are not described herein again.

S403: Obtain first configuration information based on the configuration of the first packet header.

The first configuration information includes an NHF of the first packet header, an additional field of the first packet header, and length information of the first packet header. The additional field is used to determine a protocol type of the second packet header.

For example, the parsing unit may search a correspondence table based on the protocol type of the first packet header, to determine location information of corresponding information (such as the NHF, the additional field, and the length calculation configuration information) in the first packet header. For example, the location information of the NHF may include an offset of the NHF in the first packet header and length information of the NHF. The location information of the additional field may include an offset of the additional field in the first packet header and length information of the additional field. The location information of the length calculation configuration information may include an offset of the length calculation configuration information in the first packet header and length information of the length calculation configuration information.

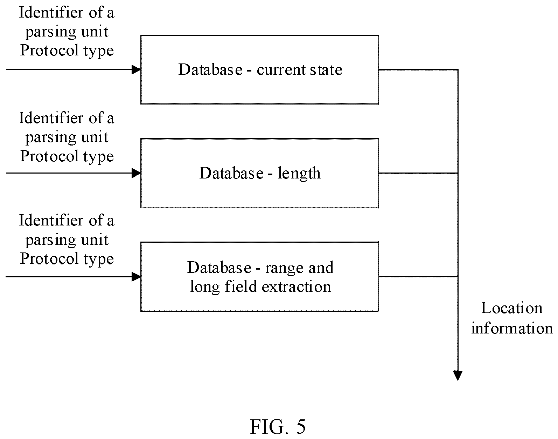

For example, as shown in FIG. 5, the parsing unit may search a third table (for example, DB. RLFE) based on the protocol type (State) of the first packet header, to obtain the location information of the additional field in the first packet header. The parsing unit may further search a fourth table (for example, DB.CS) based on the protocol type of the first packet header, to obtain the location information of the NHF in the first packet header. The parsing unit may further search a fifth table (for example, DB.Len) based on the protocol type of the first packet header, to obtain the length calculation configuration information of the first packet header.

It should be noted that length information of packet headers having different protocol types may be fixed or may not be fixed. Therefore, when the length information of the first packet header is fixed and known, the foregoing operation of searching for the DB.Len may not be performed any more, to reduce workload of the parsing unit. The following uses an example in which the length information of the first packet header is not fixed. In other words, the length information of the first packet header can be obtained only by searching the DB.Len.

In addition, a packet parsing engine in this embodiment of this application may include a plurality of parsing units, and different parsing units process different packets. Therefore, as shown in FIG. 5, when the corresponding information in the first packet header is determined, an identifier (for example, PS_ID) of the parsing unit is further input. Therefore, before searching, it can be determined whether the table (for example, the DB.RLFE, the DB.CS, and the DB.Len) is a correct table. Certainly, in some implementation scenarios, if the packet parsing engine includes only one parsing unit, the corresponding information of the packet header may be determined without entering the PS_ID.

In this case, an extraction operation shown in FIG. 3 is completed. To be specific, an NHF, length calculation configuration information, and location information of an additional field in a packet header that are included in a current packet header (for example, the first packet header) are extracted.

After the extraction is completed, the parsing unit may extract the NHF, the additional field, and the length calculation configuration information from the first packet header based on the location information of the NHF, the length calculation configuration information, and the additional field in the packet header that are included in the extracted current packet header (for example, the first packet header).

For example, a corresponding field is extracted from the first packet header as the NHF field based on an offset that is of the NHF in the first packet header and that is indicated by the location information of the NHF and the length information of the NHF. A corresponding field is extracted from the first packet header as a field of the additional field based on an offset that is of the additional field in the first packet header and that is indicated by the location information of the additional field and the length information of the additional field. A corresponding field is extracted from the first packet header as a field of the length calculation configuration information based on an offset that is of the length calculation configuration information in the first packet header and that is indicated by the location information of the length calculation configuration information and the length information of the length calculation configuration information.

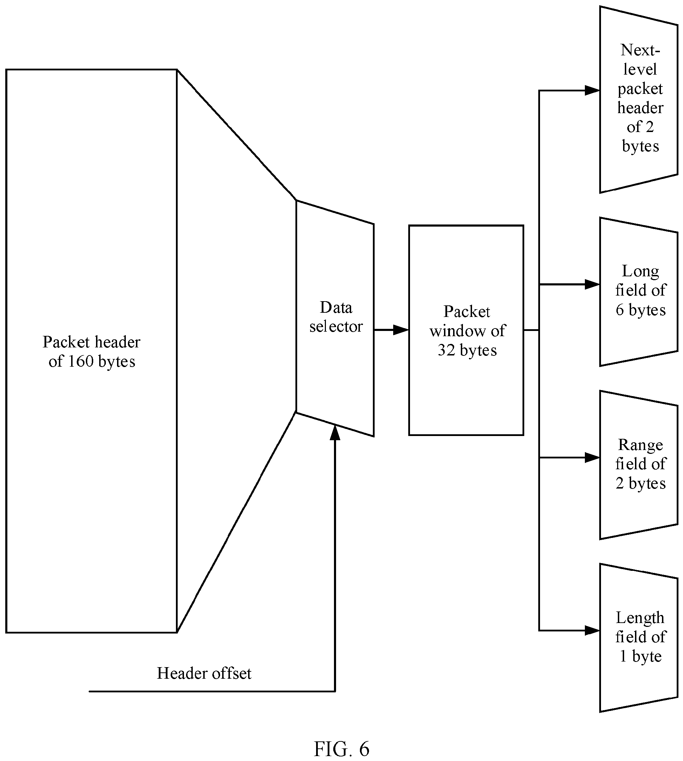

In a possible implementation, FIG. 6 shows a schematic diagram of a corresponding information extraction method. For example, a length of the first packet header (for example, a Packet Header) is 160 bytes (Byte, B). The parsing unit may input all fields of the packet header of 160 B to a data selector (Sliced mux) disposed in the parsing unit, and input an offset that includes a packet header and a header offset of location information of the foregoing corresponding information to the sliced mux at the same time. Based on the sliced mux, a packet window (Input Window) whose length is 32 B and that includes all corresponding information may be determined. It should be noted that, in this embodiment of this application, to avoid processing a large data amount (for example, all 160 B fields of a packet header) for a plurality of times, the parsing unit may extract the input window of 32 B from the packet header, and further extract an NHF of 2 B, a length field of 1 B, and an additional field from the input window. In this example, the additional field may include a range field of 2 B and a long field of 6 B.

In this way, the recognition operation shown in FIG. 3 is completed. In other words, the corresponding information of the first packet header, such as the NHF, the additional field, and the length calculation configuration information, is identified and extracted from the first packet header based on the location of the corresponding information extracted in the first step.

S404: Determine a configuration of the second packet header based on the first configuration information.

The configuration of the second packet header includes the protocol type of the second packet header and the offset of the second packet header in the packet.

In this embodiment of this application, after the configuration information of the first packet header is obtained, the configuration of the second packet header may be determined based on the configuration information of the first packet header by using a plurality of different methods. The parsing unit may obtain the offset of the second packet header by calculation based on the offset of the first packet header and the length information of the first packet header. The following describes in detail a method for obtaining the protocol type of the second packet header by the parsing unit.

For example, in some embodiments, the parsing unit may search the first table based on the additional field, to determine the protocol type of the second packet header.

For example, the first table may include a correspondence between one or more additional fields and a protocol type of a next-level packet header. It may be understood that when the next-level packet header (for example, the second packet header) is a packet header of a special protocol type, the protocol type of the second packet header may not be correctly obtained by using another determining method. Therefore, in this example, a corresponding indication identifier may be carried in the additional field of the first packet header, so that the parsing unit can determine the protocol type of the second packet header based on the indication identifier by searching the first table.

It should be noted that, in this embodiment of this application, the additional field may, as described above, indicate a protocol type of the second packet header used as the special packet header. In another implementation, the additional field may also indicate the protocol type of the first packet header used as a special packet header. In other words, the additional field in the first packet header may correct a currently determined protocol type that is of the first packet header and that may have an error.

An example in which the first packet header is a first-level packet header of the packet is used. With reference to the foregoing description, the protocol type of the first packet header may be obtained by searching a correspondence table by using a physical port number used to receive the packet. When the first packet header is the packet header of the special protocol type, a result obtained by searching the correspondence table by using the physical port number may be incorrect, and the protocol type of the first packet header cannot be correctly reflected. Therefore, in this embodiment of this application, the additional field in the first packet header may be extracted. The special protocol type corresponding to the additional field may be determined by searching the correspondence table based on the additional field. Then, the parsing unit may update the protocol type of the current packet header (for example, the first packet header).

It may be understood that, generally, a protocol type of a next-level packet header of the special packet header is predictable. Therefore, after determining that the first packet header is the special packet header, the parsing unit may determine the protocol type that is of the next-level packet header and that corresponds to the protocol type of the first packet header. Further, the protocol type of the second packet header is determined.

In the foregoing example, the first packet header is the first-level packet header of the packet. It should be understood that when the first packet header is a second-level packet header or another packet header of the packet, and when the first packet header is a packet header of a special protocol type, the protocol type of the first packet header may be incorrectly estimated. Therefore, in this embodiment of this application, the protocol type of the first packet header may be updated based on the additional field, so that an accurate packet parsing result can be obtained, and a protocol type of the next-level packet header can be accurately estimated based on the first packet header.

According to the packet parsing method provided in this embodiment of this application, in addition to the foregoing determining the protocol type of the second packet header by using the additional field, another implementation is further provided, to determine the protocol type of the second packet header.

For example, the parsing unit may determine a target entry that corresponds to a key and that is in each row of entries in the second table (for example, referred to as a TCAM table) corresponding to the TCAM, and use a protocol type indicated by the target entry as the protocol type of the second packet header. The key for performing TCAM searching may be generated based on the NHF of the first packet header. For example, a composition form of the key may be {PS_ID, protocol type of the first packet header, NHF}. The parsing unit may input the key into the TCAM table to perform TCAM searching.

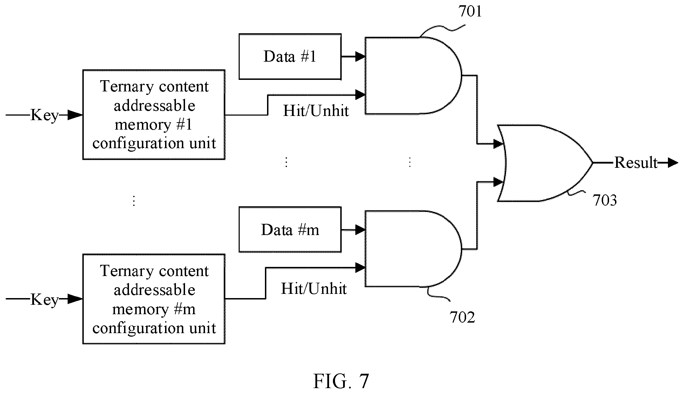

In some implementations, when TCAM searching is performed by using a key, if matching results of all rows of the TCAM are different, TCAM searching may be implemented by using TCAM searching logic shown in FIG. 7. This ensures low power consumption and low delay for TCAM searching.

It may be understood that, in the TCAM table, each row of data may correspond to one TCAM configuration unit (TCAM ROW). For example, the TCAM table includes m rows of data, which are respectively data #1 to data #m. As shown in FIG. 7, the parsing unit may use the key to match each TCAM ROW in the TCAM table. When a matching result between the key and TCAM ROW is true, the matching is successful, that is, a matching result is hit. In this case, a corresponding TCAM ROW can output 1. Correspondingly, when the matching result between the key and the corresponding row is false, it is considered that matching fails, that is, the matching result is miss. In this case, the corresponding TCAM ROW can output 0.

As shown in FIG. 7, after the matching result is obtained, the result and data corresponding to the TCAM ROW may be input to an AND gate together for AND calculation. For example, an output result of a TCAM ROW #1 and data #1 are input to an AND gate 701 together. For another example, an output result of a TCAM ROW #m and data #m are input to an AND gate 702 together. When the output of TCAM ROW is 1, a result of AND calculation is corresponding data. When the output of TCAM ROW is 0, the result of AND calculation is 0. All results of AND calculation are input to an OR gate 703 for OR calculation, so that a TCAM searching result matching the key can be obtained by using a result output by the OR gate 703. According to the result, the parsing unit may determine the protocol type corresponding to the search result, and use the protocol type as the protocol type of the second packet header.

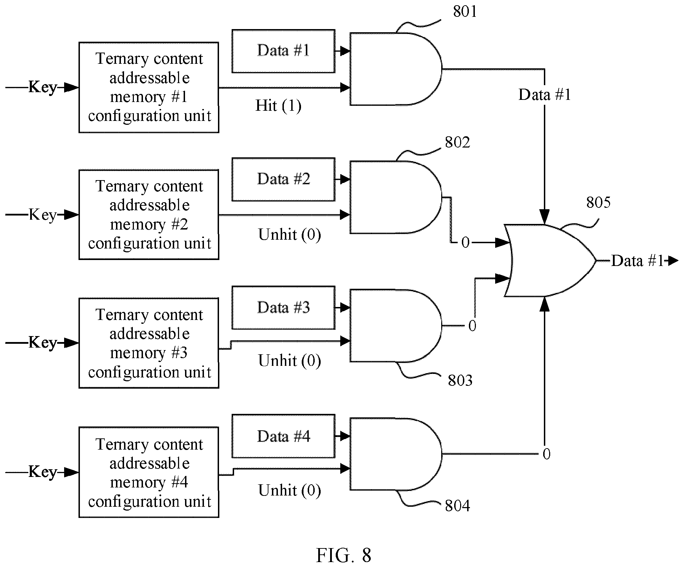

For example, m = 4 is used as an example to describe a method for performing TCAM searching according to the search logic shown in FIG. 7. As shown in FIG. 8, the parsing unit may separately match TCAM ROW #1 to #4 by using keys. For example, if a matching result between the key and the TCAM ROW #1 is hit, 1 is output. If other matching results are miss, 0 is output. An AND gate at the back end of the TCAM ROW can be used to perform AND calculation on an output result and corresponding data. For example, an AND gate 801 may perform AND calculation on an output result (that is, 1) of the TCAM ROW #1 and data #1, and output the data #1. An AND gate 802 may perform AND calculation on an output result (that is, 0) of a TCAM ROW #2 and Data #2, and output 0. An AND gate 803 may perform AND calculation on an output result (that is, 0) of a TCAM ROW #3 and Data #3, and output 0. An AND gate 804 may perform AND calculation on an output result (that is, 0) of a TCAM ROW #4 and Data #4, and output 0. After the results of the AND calculation are separately obtained, the AND gate may separately input the calculation results of the AND gate to an OR gate 805 for OR calculation. As shown in FIG. 8, input items for performing an OR operation are respectively data #1, 0, 0, and 0. Therefore, output after the OR operation is the data #1. In this way, the parsing unit determines, through TCAM searching, a search result that matches the key, that is, the Data #1. Then, the parsing unit may determine a corresponding protocol type of the data #1, and use the protocol type as the protocol type of the second packet header.

It may be understood that, in the foregoing example, because each row of the TCAM has a different matching result, but there is only one key, only one hit appears in a matching result with the TCAM ROW, and then one piece of corresponding data is determined as the TCAM searching result. However, during TCAM search, different TCAM ROWs may include only a part of data corresponding to the key. Therefore, a matching result includes a plurality of hits. In this case, if the search logic shown in FIG. 7 is used, OR calculation may be performed on a plurality of pieces of data. In this case, a correct search result cannot be obtained. To cope with this case, this embodiment of this application further provides other search logic, so that a TCAM searching result can be accurately determined.

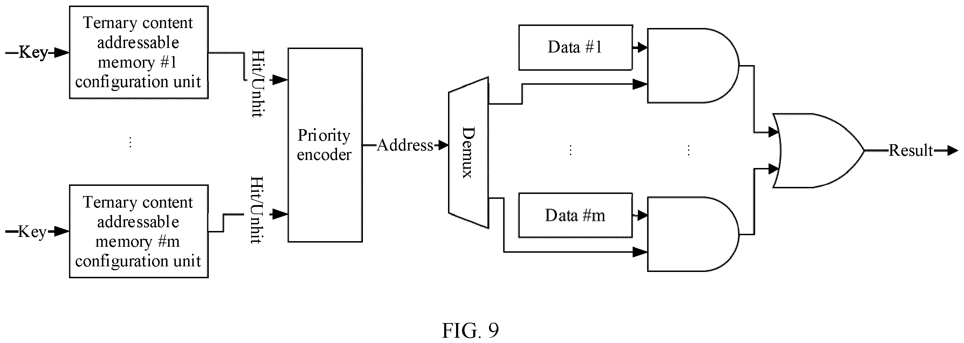

For example, FIG. 9 is another schematic diagram of TCAM searching logic according to an embodiment of this application. As shown in FIG. 9, different from FIG. 7, a priority encoder and a demux are disposed between a TCAM ROW and an AND gate. When the search logic shown in FIG. 9 is used to perform TCAM searching, after the key is matched with each TCAM ROW, a plurality of hit results may appear. The parsing unit may input the matching results to the priority encoder based on a TCAM ROW sequence. The priority encoder performs priority addressing on the input matching results, and obtains and outputs an address (such as an Idx) of the TCAM ROW whose first matching result is hit. The demux may receive the Idx, and set a corresponding bit of the Idx to 1 and other bits to 0 in a binary number whose length is m bits based on the Idx. Then, the demux can perform AND calculation on adjusted m-bit output and data of the corresponding address. It may be understood that, after AND calculation is performed, only data corresponding to a TCAM ROW whose first matching result is hit is reserved, and data corresponding to another TCAM ROWs is set to 0. Therefore, after OR calculation is performed, data corresponding to the TCAM ROW whose matching result is hit may be obtained. In this way, OR calculation is not performed on a plurality of pieces of data. Therefore, the parsing unit may use the data as a search result of the TCAM, and determine the protocol type of the second packet header accordingly.

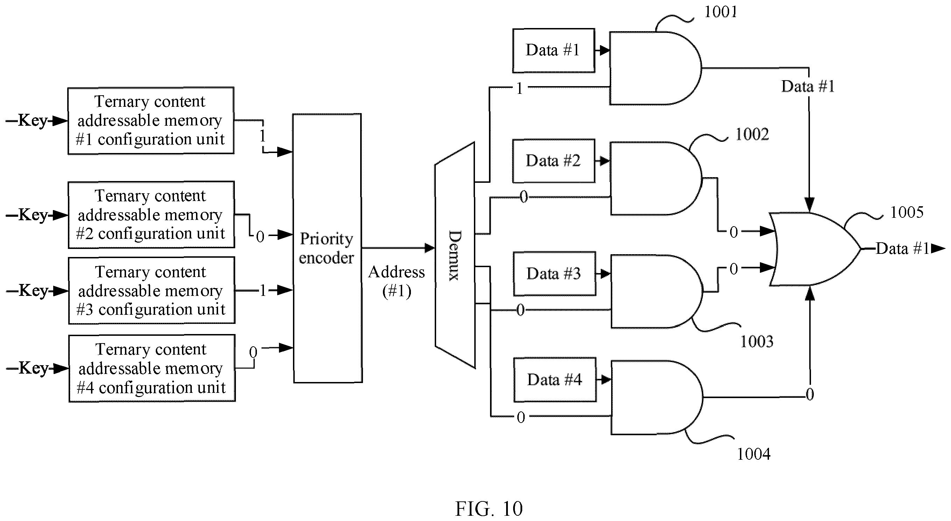

The following continues to use m = 4 as an example to describe a method for performing TCAM searching according to the search logic shown in FIG. 9. As shown in FIG. 10, the parsing unit may separately match TCAM ROW #1 to #4 by using keys. For example, if a matching result between the key and the TCAM ROW #1 and between the key and the TCAM ROW #3 are hit, 1 is output. If other matching results are miss, 0 is output. The output results can be transmitted to the priority encoder for priority addressing and an address with a highest priority can be output. For example, as shown in FIG. 10, the matching result input to the priority encoder may be denoted as 0101 sorted based on a sequence of #4 to #1. The priority encoder may determine, based on the input matching result, an address (that is, the Idx) corresponding to a first non-zero matching result from right to left in the matching result. For example, the matching result is 0101, and the address of the first non-zero matching result from right to left is #1. In this case, the Idx may be #1. The priority encoder can send the Idx (such as #1) to the demux. The demux can set a corresponding bit to 1 and other bits to 0 based on the received address. For example, in this example, the TCAM table includes four TCAM ROWs in total, and a priority addressing result of the priority encoder is #1. Therefore, the demux may set the first bit to 1 and other bits to 0, that is, output 0001. Then, the demux can allocate an adjusted matching results to a corresponding logic branch and perform AND calculation with the corresponding data. For example, 1 of a #1 bit and the data #1 are input into an AND gate 1001 together, to obtain an AND result of the data #1. 0 of a #2 bit and the data #2 are input into an AND gate 1002 together, to obtain an AND result of 0. 0 of a #3 bit and the data #3 are input into an AND gate 1003 together, to obtain an AND result of 0. 0 of a #4 bit and the data #4 are input into the AND gate 1004 together, to obtain an AND result of 0. After the AND result of each logic branch is obtained, these results may be separately input to an OR gate 1005 for OR calculation, to obtain an OR result of the data #1. Then, the parsing unit may determine a corresponding protocol type of the data #1, and use the protocol type as the protocol type of the second packet header.

It can be learned that in the examples shown in FIG. 9 and FIG. 10, the priority encoder and the demux are disposed between the TCAM ROW and the AND gate, so that when the plurality of matching results in the TCAM ROW are all hits, OR calculation is not performed on the plurality of pieces of data. Therefore, a query result cannot correctly correspond to the data.

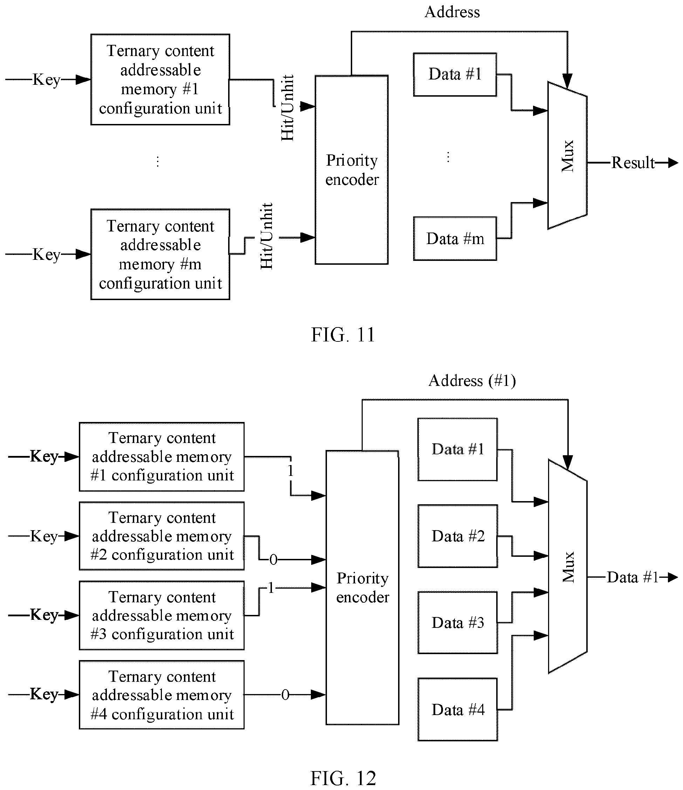

FIG. 11 is still another schematic diagram of TCAM searching logic according to an embodiment of this application. By using the search logic, when a plurality of matching results in the TCAM ROW are all hits, a problem that a final query result cannot correspond to data does not occur. Therefore, TCAM query can be performed when whether a matching result is unique is unknown.

As shown in FIG. 11, after matching the key with each TCAM ROW, the parsing unit may input the matching results to the priority encoder based on a TCAM ROW sequence. The priority encoder performs priority addressing on the input matching results, obtains and outputs an address (such as an Idx) of the TCAM ROW whose first matching result is hit, and outputs the address to the mux. Data corresponding to different TCAM ROWs is also synchronously input to the mux, for example, the data #1 to the data #m. Based on the address indicated by the Idx, the mux filters the data corresponding to the address from the plurality of input data as the output (Result) of the mux. The mux outputs only one complete data. Therefore, the problem that the query result cannot correspond to the data does not occur.

Similarly, the following continues to use m=4 as an example to describe a method for performing TCAM searching according to the search logic shown in FIG. 11. As shown in FIG. 12, the parsing unit may separately match TCAM ROW #1 to #4 by using keys. For example, if a matching result between the key and the TCAM ROW #1 and between the key and the TCAM ROW #3 are hit, 1 is output. If other matching results are miss, 0 is output. The output results can be transmitted to the priority encoder for priority addressing and an address with a highest priority can be output. For example, as shown in FIG. 12, the matching result input to the priority encoder may be denoted as 0101 sorted based on a sequence of #4 to #1. The priority encoder may determine, based on the input matching result, an address (that is, the Idx) corresponding to a first non-zero matching result from right to left in the matching result. For example, the matching result is 0101, and the address of the first non-zero matching result from right to left is #1. In this case, the Idx may be #1. The priority encoder can send the Idx (such as #1) to the mux. Data #1, data #2, data #3, and data #4 are also input to mux. The mux may use, based on the #1 indicated by Idx, the data #1 corresponding to the address in the input data as an output. In this way, the TCAM searching result, that is, the data #1, is obtained. Then, the parsing unit may determine a corresponding protocol type of the data #1, and use the protocol type as the protocol type of the second packet header.

It should be understood that, in the foregoing examples shown in FIG. 9 (or FIG. 10) and FIG. 11 (or FIG. 12), different search logic is used to implement TCAM searching when it cannot be determined whether a matching result has a plurality of hits. The priority encoder and the demux used in the solution shown in FIG. 9 have a feature of low power consumption, so that power consumption of each time of TCAM searching can be significantly reduced. Corresponding to the solution shown in FIG. 11 that the priority encoder and the mux are used, because demux processing is not performed during sequential processing, a TCAM searching speed can be improved. In an actual use process, flexible selection may be performed based on a specific requirement. This is not limited in this embodiment of this application.

The foregoing describes two different methods for determining the protocol type of the second packet header provided in this embodiment of this application. It should be noted that when the first packet header and/or the second packet header correspond/corresponds to a special protocol type, the protocol type that is of the packet header and that is determined based on the additional field is more accurate. However, because the correspondence included in the first table is limited, when the first packet header and/or the second packet header correspond/corresponds to a common protocol type, the protocol type of the second packet header can be determined more conveniently by performing TCAM searching. Based on the foregoing description, in this embodiment of this application, when the corresponding protocol type can be determined based on the additional field, the protocol type of the second packet header is determined based on the protocol type. When the corresponding protocol type cannot be determined based on the additional field, TCAM searching is used to determine the protocol type of the second packet header. Therefore, the protocol type of the second packet header can be accurately determined, and the correspondence table can be adjusted as required, to implement programmable packet parsing.

After configurations of different packet headers included in the packet are determined, when a field of a protocol type needs to be extracted, a location of a corresponding control field (or referred to as a key field) in the packet header may be determined based on the configuration, and extracted. In this way, data can be transmitted and processed at different layers. The following uses an example in which the processor extracts the key field based on the configuration of the packet header.

For example, the processor may generate, based on the configurations of different packet headers included in the packet, a packet header descriptor (PHD) corresponding to each packet header in the packet. For example, when the packet includes N packet headers (for example, a packet header 1 to a packet header n), the processor may generate N PHDs (for example, PHD 1 to PHD n) based on a configuration of the packet header. When the processor needs to extract the key field of the protocol type, the processor may obtain a location of the key field in the packet header based on the corresponding PHD. The processor may obtain a corresponding extraction command from a corresponding command library, and extract the key field based on the extraction command. It may be understood that, generally, the processor may simultaneously extract a plurality of key fields corresponding to a plurality of different protocol types. In this embodiment of this application, the processor may extract the plurality of key fields in parallel based on the N PHDs.

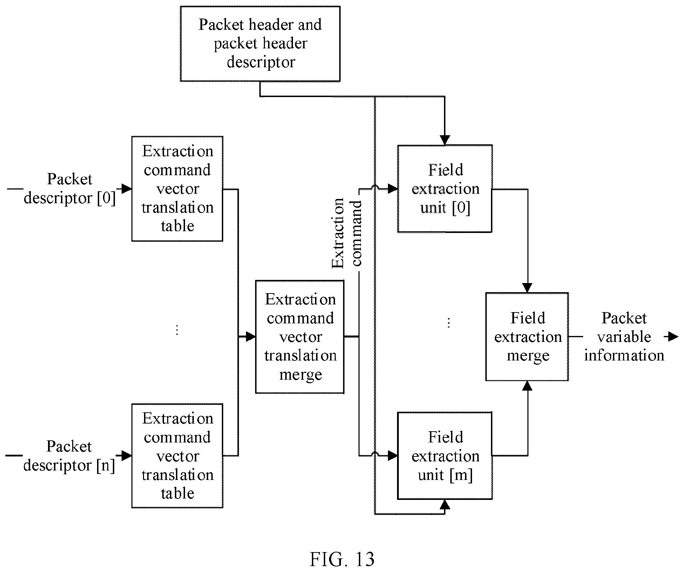

For example, FIG. 13 is a schematic diagram of logic of a data extraction method according to an embodiment of this application. For example, a processor needs to extract key fields of N different protocol types. N PHDs (for example, PHD 1 to PHD n) respectively corresponding to the N key fields may be respectively input into an extraction command vector translation table (ECVTT). The ECVTT may store a correspondence between the PHD and an extraction command. Extraction commands of N different key fields can be obtained through ECVTT query. It should be noted that, in an actual execution process, there may be a plurality of ECVTT tables, or there may be one ECVTT table. In FIG. 13, an example in which N ECVTTs are included is used. After the ECVTT query result is obtained, the N extraction commands may be respectively input into ECVTT Merge for summarization, to integrate dispersed extraction commands to facilitate extraction. Then, the extraction command (Cmd_idx) obtained through ECVTT Merge processing may be separately input into a plurality of field extraction segments (EFS) (for example, respectively input into m EFSs). The m EFSs may separately perform a parallel extraction operation on a final extraction command, to summarize extracted fields in the EFS Merge, to obtain corresponding packet variable information (Packet Template Vector, PTV) including N key fields.

It should be noted that, after obtaining the N key fields, the processor may apply and process the corresponding key fields by using an arithmetic logical unit (ALU) disposed therein. To enable the ALU to accurately obtain a corresponding key field in the PTV, in this embodiment of this application, after extracting corresponding data, the m EFSs may input the corresponding data into a corresponding location of the PTV field according to a preset rule. Therefore, the ALU can obtain the corresponding key field in the PTV according to the preset rule, determine locations of key fields to be processed and accurately extract and process the fields.

Refer to the foregoing description. According to the packet parsing method provided in this embodiment of this application, refer to the NHF and the additional field included in the packet header. A protocol type and an offset of a next-level packet header are accurately determined based on a protocol type and an offset of a previous-level packet header. Parsing of a plurality of new protocols can be supported. In this way, a packet parsing process is flexible and programmable.

Further, a plurality of different TCAM query methods are provided to adapt to different requirement scenarios, to obtain optimal query logic in a corresponding scenario. A plurality of parsing units share a database in a storage module to implement data sharing and reduce the storage pressure. When a plurality of key fields need to be extracted, a parallel extraction method is used to effectively reduce time required for extracting the key fields.

The solutions provided in embodiments of this application are described above mainly from perspectives of the parsing unit. It may be understood that to implement the foregoing functions, the parsing unit includes a corresponding hardware structure and/or software module for implementing each function. A person of ordinary skill in the art should easily be aware that, in combination with the steps described in the embodiments disclosed in this specification, steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules in the parsing unit may be defined based on the foregoing method examples. For example, each functional module may be defined in a correspondence to each function, or two or more functions may be integrated in one processing module. The integrated module may be implemented in a form of hardware, or may be implemented in a form of a software functional module. Optionally, in the embodiments of this application, division into modules is used as an example, and is merely logical function division. In actual implementation, another division manner may be used.

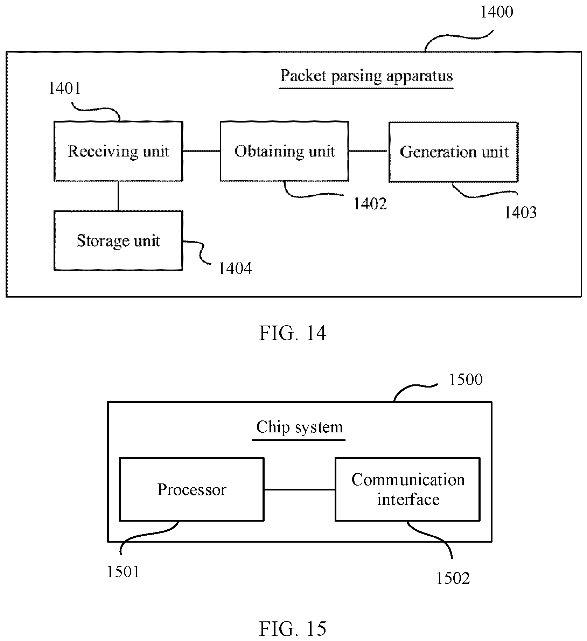

FIG. 14 shows a schematic composition diagram of a packet parsing apparatus 1400. The packet parsing apparatus 1400 may be configured to perform the function of the parsing unit in the foregoing embodiment. In a possible implementation, as shown in FIG. 14, the packet parsing apparatus 1400 may include a receiving unit 1401 and an obtaining unit 1402.

The receiving unit 1401 is configured to receive a packet, where the packet includes at least a first packet header and a second packet header, and the second packet header is a next-level packet header of the first packet header. For example, the receiving unit 1401 may be configured to perform S401 shown in FIG. 4.

The obtaining unit 1402 is configured to obtain a configuration of the first packet header, where the configuration of the first packet header includes a protocol type of the first packet header. The obtaining unit 1402 is further configured to obtain first configuration information from the first packet header based on the configuration of the first packet header, where the first configuration information includes a next packet header field (NHF) and an additional field of the first packet header. The obtaining unit 1402 is further configured to: search a first table based on the additional field to obtain a protocol type corresponding to the additional field, and search a second table based on the NHF to obtain a protocol type corresponding to the NHF; when there is the protocol type corresponding to the additional field in the first table, obtain a protocol type of the second packet header based on the protocol type corresponding to the additional field; and when there is no protocol type corresponding to the additional field in the first table, obtain the protocol type of the second packet header based on the protocol type corresponding to the NHF. For example, the receiving unit 1401 may be configured to perform S402 to S404 shown in FIG. 4.

In a possible design, the configuration of the first packet header further includes an offset of the first packet header, and the first configuration information further includes length information of the first packet header. The obtaining unit 1402 is further configured to obtain an offset of the second packet header based on the length information of the first packet header and the offset of the first packet header.

In a possible design, the obtaining unit 1402 is further configured to: when the first packet header is a first-level packet header of the packet, obtain the configuration of the first packet header based on a physical port number used to receive the packet; and when the first packet header is not the first-level packet header of the packet, obtain second configuration information based on a configuration of a previous-level packet header of the first packet header. The second configuration information includes an NHF of the previous-level packet header, an additional field of the previous-level packet header, and length information of the previous-level packet header. The additional field is used to determine the configuration of the first packet header, and obtain the configuration of the first packet header based on the second configuration information.

In a possible design, the obtaining unit 1402 is further configured to: search a third table based on the protocol type of the first packet header to obtain first location information, where the first location information indicates a location of the additional field in the first packet header, and extract the additional field from the first packet header based on the first location information. The obtaining unit 1402 is further configured to: search a fourth table based on the protocol type of the first packet header to obtain second location information, where the second location information indicates a location of the NHF in the first packet header, and extract the NHF from the first packet header based on location information of the NHF. The obtaining unit 1402 is further configured to: search a fifth table based on the protocol type of the first packet header to obtain third location information, where the third location information indicates a location of length calculation configuration information in the first packet header, and calculate to obtain the length information of the first packet header based on the length calculation configuration information.

In a possible design, the obtaining unit 1402 is further configured to perform ternary content addressable memory (TCAM) searching on the second table based on the NHF to obtain the protocol type corresponding to the NHF.

In a possible design, the obtaining unit 1402 is further configured to: generate, based on the NHF, a search key corresponding to the NHF; determine an entry corresponding to the key in the second table; when there is the entry corresponding to the key in the second table, use a protocol type indicated by the entry as the protocol type corresponding to the NHF; and when there are a plurality of entries corresponding to the key in the second table, determine a target entry from the plurality of entries through priority addressing, and use a protocol type indicated by the target entry as the protocol type corresponding to the NHF.

In a possible design, the apparatus further includes a generation unit 1403, configured to generate a packet descriptor (PHD) of the packet based on the configuration of the first packet header and a configuration of the second packet header. The configuration of the second packet header includes the protocol type and the offset that are of the second packet header.

In a possible design, the obtaining unit 1402 is further configured to obtain packet variable information (PTV) based on the PHD, where the PTV includes a key field.

In a possible design, the apparatus further includes a storage unit 1404. The storage unit 1404 is configured to store a configuration table, where the configuration table includes at least correspondences included in the first table, the second table, the third table, the fourth table, and the fifth table. When the packet parsing apparatus includes a plurality of packet parsing units, the plurality of packet parsing units share the configuration table stored in the storage unit 1404.

It should be noted that all related content of the steps in the foregoing method embodiments may be cited in function description of corresponding functional modules. Details are not described herein again. The packet parsing apparatus provided in this embodiment of this application is configured to perform the function of the parsing unit in the foregoing communication method, and therefore can achieve a same effect as the foregoing packet parsing method. As optional rather than mandatory, it may be understood that, when necessary, the packet parsing apparatus provided in this embodiment of this application may include a processing module or a control module configured to support the receiving unit 1401 and/or the obtaining unit 1402 and/or the generation unit 1403 and/or the storage unit 1404 in completing corresponding functions.

FIG. 15 shows a schematic composition diagram of a chip system 1500. The chip system 1500 may include a processor 1501 and a communication interface 1502, configured to support the parsing unit in implementing the functions in the foregoing embodiments. In a possible design, the chip system 1500 further includes a memory, configured to store program instructions and data that are necessary for a terminal. The chip system may include a chip, or may include a chip and another discrete component.

It should be noted that all related content of the steps in the foregoing method embodiments may be cited in function description of corresponding functional modules. Details are not described herein again. The data transmission apparatus provided in this embodiment of this application is configured to perform functions of the terminal in the foregoing communication method, and therefore can achieve a same effect as the foregoing communication method.

It should be understood that all or some of the functions, actions, operations, steps, or the like in the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

Although this application is described with reference to specific features and embodiments thereof, it is clear that various modifications and combinations may be made to them without departing from the scope of this application. Correspondingly, the specification and accompanying drawings are merely example description of this application defined by the accompanying claims.

It is clearly that a person skilled in the art can make various modifications and variations to this application without departing from the scope of this application. This application is intended to cover these modifications and variations of this application provided that they fall within the scope of protection defined by the following claims.

## Claims

1. A packet parsing method, wherein the method comprises:
receiving a packet, wherein the packet comprises at least a first packet header and a second packet header, and the second packet header is a next-level packet header of the first packet header;
obtaining a configuration of the first packet header, wherein the configuration of the first packet header comprises a protocol type of the first packet header;
obtaining first configuration information from the first packet header based on the configuration of the first packet header, wherein the first configuration information comprises a next packet header field, NHF, and an additional field of the first packet header;
searching a first table based on the additional field to obtain a protocol type corresponding to the additional field, and searching a second table based on the NHF to obtain a protocol type corresponding to the NHF;
when there is the protocol type corresponding to the additional field in the first table, obtaining a protocol type of the second packet header based on the protocol type corresponding to the additional field; and
when there is no protocol type corresponding to the additional field in the first table, obtaining the protocol type of the second packet header based on the protocol type corresponding to the NHF.

2. The method according to claim 1, wherein the configuration of the first packet header further comprises an offset of the first packet header, and the first configuration information further comprises length information of the first packet header; and
the method further comprises:
obtaining an offset of the second packet header based on the length information of the first packet header and the offset of the first packet header.

3. The method according to claim 2, wherein the obtaining a configuration of the first packet header comprises:
when the first packet header is a first-level packet header of the packet, obtaining the configuration of the first packet header based on a physical port number used to receive the packet; and
when the first packet header is not the first-level packet header of the packet, obtaining second configuration information based on a configuration of a previous-level packet header of the first packet header, wherein the second configuration information comprises an NHF of the previous-level packet header, an additional field of the previous-level packet header, and length information of the previous-level packet header, and the additional field is used to determine the configuration of the first packet header, and obtain the configuration of the first packet header based on the second configuration information.

4. The method according to claim 2 or 3, wherein the obtaining first configuration information based on the configuration of the first packet header comprises:
searching a third table based on the protocol type of the first packet header to obtain first location information, wherein the first location information indicates a location of the additional field in the first packet header, and extracting the additional field from the first packet header based on the first location information;
searching a fourth table based on the protocol type of the first packet header to obtain second location information, wherein the second location information indicates a location of the NHF in the first packet header, and extracting the NHF from the first packet header based on the second location information; and
searching a fifth table based on the protocol type of the first packet header to obtain third location information, wherein the third location information indicates a location of length calculation configuration information in the first packet header, and calculating to obtain the length information of the first packet header based on the length calculation configuration information.

5. The method according to any one of claims 1 to 4, wherein the searching a second table based on the NHF to obtain a protocol type corresponding to the NHF comprises:
performing ternary content addressable memory, TCAM, searching on the second table based on the NHF to obtain the protocol type corresponding to the NHF.

6. The method according to claim 5, wherein the performing ternary content addressable memory, TCAM, searching on the second table based on the NHF to obtain the protocol type corresponding to the NHF comprises:
generating, based on the NHF, a search key corresponding to the NHF;
obtaining an entry corresponding to the key in the second table;
when there is the entry corresponding to the key in the second table, using a protocol type indicated by the entry as the protocol type corresponding to the NHF; and
when there are a plurality of entries corresponding to the key in the second table, determining a target entry from the plurality of entries through priority addressing, and using a protocol type indicated by the target entry as the protocol type corresponding to the NHF.

7. The method according to any one of claims 1 to 6, wherein the method further comprises:
generating a packet descriptor, PHD, of the packet based on the configuration of the first packet header and a configuration of the second packet header, wherein the configuration of the second packet header comprises the protocol type and the offset that are of the second packet header.

8. A packet parsing apparatus, wherein the apparatus comprises a receiving unit and an obtaining unit;
the receiving unit is configured to receive a packet, wherein the packet comprises at least a first packet header and a second packet header, and the second packet header is a next-level packet header of the first packet header;
the obtaining unit is configured to obtain a configuration of the first packet header, wherein the configuration of the first packet header comprises a protocol type of the first packet header;
the obtaining unit is further configured to obtain first configuration information from the first packet header based on the configuration of the first packet header, wherein the first configuration information comprises a next packet header field, NHF, and an additional field of the first packet header;
the obtaining unit is further configured to: search a first table based on the additional field to obtain a protocol type corresponding to the additional field, and search a second table based on the NHF to obtain a protocol type corresponding to the NHF;
when there is the protocol type corresponding to the additional field in the first table, obtain a protocol type of the second packet header based on the protocol type corresponding to the additional field; and
when there is no protocol type corresponding to the additional field in the first table, obtain the protocol type of the second packet header based on the protocol type corresponding to the NHF.

9. The apparatus according to claim 8, wherein the configuration of the first packet header further comprises an offset of the first packet header, and the first configuration information further comprises length information of the first packet header; and
the obtaining unit is further configured to obtain an offset of the second packet header based on the length information of the first packet header and the offset of the first packet header.

10. The apparatus according to claim 9, wherein
the obtaining unit is further configured to: when the first packet header is a first-level packet header of the packet, obtain the configuration of the first packet header based on a physical port number used to receive the packet; and
when the first packet header is not the first-level packet header of the packet, obtain second configuration information based on a configuration of a previous-level packet header of the first packet header, wherein the second configuration information comprises an NHF of the previous-level packet header, an additional field of the previous-level packet header, and length information of the previous-level packet header, and the additional field is used to determine the configuration of the first packet header, and obtain the configuration of the first packet header based on the second configuration information.

11. The apparatus according to claim 9 or 10, wherein
the obtaining unit is further configured to: search a third table based on the protocol type of the first packet header to obtain first location information, wherein the first location information indicates a location of the additional field in the first packet header, and extract the additional field from the first packet header based on the first location information;
the obtaining unit is further configured to: search a fourth table based on the protocol type of the first packet header to obtain second location information, wherein the second location information indicates a location of the NHF in the first packet header, and extract the NHF from the first packet header based on the second location information; and
the obtaining unit is further configured to: search a fifth table based on the protocol type of the first packet header to obtain third location information, wherein the third location information indicates a location of length calculation configuration information in the first packet header, and calculate to obtain the length information of the first packet header based on the length calculation configuration information.

12. The apparatus according to any one of claims 8 to 11, wherein
the obtaining unit is further configured to perform ternary content addressable memory, TCAM, searching on the second table based on the NHF to obtain the protocol type corresponding to the NHF.

13. The apparatus according to claim 12, wherein
the obtaining unit is further configured to: generate, based on the NHF, a search key corresponding to the NHF, and determine an entry corresponding to the key in the second table;
when there is the entry corresponding to the key in the second table, use a protocol type indicated by the entry as the protocol type corresponding to the NHF; and
when there are a plurality of entries corresponding to the key in the second table, determine a target entry from the plurality of entries through priority addressing, and use a protocol type indicated by the target entry as the protocol type corresponding to the NHF.

14. The apparatus according to any one of claims 8 to 13, wherein the apparatus further comprises a generation unit;
the generation unit is configured to generate a packet descriptor, PHD, of the packet based on the configuration of the first packet header and a configuration of the second packet header, wherein the configuration of the second packet header comprises the protocol type and the offset that are of the second packet header.

## Patentansprüche

1. Paketparsingverfahren, wobei das Verfahren Folgendes umfasst:
Empfangen eines Pakets, wobei das Paket mindestens einen ersten Paket-Header und einen zweiten Paket-Header umfasst und der zweite Paket-Header ein Paket-Header der nächsten Ebene des ersten Paket-Headers ist;
Erlangen einer Konfiguration des ersten Paket-Headers, wobei die Konfiguration des ersten Paket-Headers einen Protokolltyp des ersten Paket-Headers umfasst;
Erlangen von ersten Konfigurationsinformationen aus dem ersten Paket-Header basierend auf der Konfiguration des ersten Paket-Headers, wobei die ersten Konfigurationsinformationen ein nächstes Paket-Header-Feld, NHF (next packet header field), und ein zusätzliches Feld des ersten Paket-Headers umfassen;
Durchsuchen einer ersten Tabelle basierend auf dem zusätzlichen Feld, um einen Protokolltyp zu erlangen, der dem zusätzlichen Feld entspricht, und Durchsuchen einer zweiten Tabelle basierend auf dem NHF, um einen Protokolltyp zu erlangen, der dem NHF entspricht;
wenn der Protokolltyp, der dem zusätzlichen Feld entspricht, in der ersten Tabelle vorliegt, Erlangen eines Protokolltyps des zweiten Paket-Headers basierend auf dem Protokolltyp, der dem zusätzlichen Feld entspricht; und
wenn der Protokolltyp, der dem zusätzlichen Feld entspricht, in der ersten Tabelle nicht vorliegt, Erlangen des Protokolltyps des zweiten Paket-Headers basierend auf dem Protokolltyp, der dem NHF entspricht.

2. Verfahren gemäß Anspruch 1, wobei die Konfiguration des ersten Paket-Headers ferner einen Versatz des ersten Paket-Headers umfasst und die ersten Konfigurationsinformationen ferner Längeninformationen des ersten Paket-Headers umfassen; und
das Verfahren ferner Folgendes umfasst:
Erlangen eines Versatzes des zweiten Paket-Headers basierend auf den Längeninformationen des ersten Paket-Headers und dem Versatz des ersten Paket-Headers.

3. Verfahren gemäß Anspruch 2, wobei das Erlangen einer Konfiguration des ersten Paket-Headers Folgendes umfasst:
wenn der erste Paket-Header ein Paket-Header erster Ebene des Pakets ist, Erlangen der Konfiguration des ersten Paket-Headers basierend auf einer physischen Portnummer, die zum Empfangen des Pakets verwendet wird; und
wenn der erste Paket-Header nicht der Paket-Header erster Ebene des Pakets ist, Erlangen von zweiten Konfigurationsinformationen basierend auf einer Konfiguration eines Paket-Headers vorheriger Ebene des ersten Paket-Headers, wobei die zweiten Konfigurationsinformationen ein NHF des Paket-Headers vorheriger Ebene, ein zusätzliches Feld des Paket-Headers vorheriger Ebene und Längeninformationen des Paket-Headers vorheriger Ebene umfassen und das zusätzliche Feld verwendet wird, um die Konfiguration des ersten Paket-Headers zu bestimmen und die Konfiguration des ersten Paket-Headers basierend auf den zweiten Konfigurationsinformationen zu erlangen.

4. Verfahren gemäß Anspruch 2 oder 3, wobei das Erlangen der ersten Konfigurationsinformationen basierend auf der Konfiguration des ersten Paket-Headers Folgendes umfasst:
Durchsuchen einer dritten Tabelle basierend auf dem Protokolltyp des ersten Paket-Headers, um erste Ortsinformationen zu erlangen, wobei die ersten Ortsinformationen einen Ort des zusätzlichen Feldes in dem ersten Paket-Header anzeigen, und Extrahieren des zusätzlichen Feldes aus dem ersten Paket-Header basierend auf den ersten Ortsinformationen;
Durchsuchen einer vierten Tabelle basierend auf dem Protokolltyp des ersten Paket-Headers, um zweite Ortsinformationen zu erlangen, wobei die zweiten Ortsinformationen einen Ort des NHF in dem ersten Paket-Header anzeigen, und Extrahieren des NHF aus dem ersten Paket-Header basierend auf den zweiten Ortsinformationen; und
Durchsuchen einer fünften Tabelle basierend auf dem Protokolltyp des ersten Paket-Headers, um dritte Ortsinformationen zu erlangen, wobei die dritten Ortsinformationen einen Ort von Längenberechnungskonfigurationsinformationen in dem ersten Paket-Header anzeigen, und Berechnen, um die Längeninformationen des ersten Paket-Headers basierend auf den Längenberechnungskonfigurationsinformationen zu erlangen.

5. Verfahren gemäß einem der Ansprüche 1 bis 4, wobei das Durchsuchen einer zweiten Tabelle basierend auf dem NHF, um einen Protokolltyp zu erlangen, der dem NHF entspricht, Folgendes umfasst:
Durchführen einer ternären inhaltsadressierbaren Speicherdurchsuchung, TCAM (ternary content addressable memory), in der zweiten Tabelle basierend auf dem NHF, um den Protokolltyp zu erlangen, der dem NHF entspricht.

6. Verfahren gemäß Anspruch 5, wobei das Durchführen der ternären inhaltsadressierbaren Speicherdurchsuchung, TCAM, in der zweiten Tabelle basierend auf dem NHF, um den Protokolltyp zu erlangen, der dem NHF entspricht, Folgendes umfasst:
Generieren eines Suchschlüssels, der dem NHF entspricht, basierend auf dem NHF;
Erlangen eines Eintrages in der zweiten Tabelle, der dem Schlüssel entspricht;
wenn der Eintrag, der dem Schlüssel entspricht, in der zweiten Tabelle vorliegt, Verwenden eines Protokolltyps, der durch den Eintrag angezeigt wird, als der Protokolltyp, der dem NHF entspricht; und
wenn eine Vielzahl von Einträgen, die dem Schlüssel entspricht, in der zweiten Tabelle vorliegt, Bestimmen eines Zieleintrags aus der Vielzahl von Einträgen durch Prioritätsadressierung und Verwenden eines Protokolltyps, der durch den Zieleintrag angezeigt wird, als der Protokolltyp, der dem NHF entspricht.

7. Verfahren gemäß einem der Ansprüche 1 bis 6, wobei das Verfahren ferner Folgendes umfasst:
Generieren eines Paketdeskriptors, PHD (packet descriptor), des Pakets basierend auf der Konfiguration des ersten Paket-Headers und einer Konfiguration des zweiten Paket-Headers, wobei die Konfiguration des zweiten Paket-Headers den Protokolltyp und den Versatz umfasst, die zu dem zweiten Paket-Header gehören.

8. Paketparsingvorrichtung, wobei die Vorrichtung eine Empfangseinheit und eine Erlangungseinheit umfasst;
wobei die Empfangseinheit dazu konfiguriert ist, ein Paket zu empfangen, wobei das Paket mindestens einen ersten Paket-Header und einen zweiten Paket-Header umfasst und der zweite Paket-Header ein Paket-Header der nächsten Ebene des ersten Paket-Headers ist;
wobei die Erlangungseinheit dazu konfiguriert ist, eine Konfiguration des ersten Paket-Headers zu erlangen, wobei die Konfiguration des ersten Paket-Headers einen Protokolltyp des ersten Paket-Headers umfasst;
wobei die Erlangungseinheit ferner dazu konfiguriert ist, erste Konfigurationsinformationen aus dem ersten Paket-Header basierend auf der Konfiguration des ersten Paket-Headers zu erlangen, wobei die ersten Konfigurationsinformationen ein nächstes Paket-Header-Feld, NHF, und ein zusätzliches Feld des ersten Paket-Headers umfassen;
wobei die Erlangungseinheit ferner zu Folgendem konfiguriert ist: Durchsuchen einer ersten Tabelle basierend auf dem zusätzlichen Feld, um einen Protokolltyp zu erlangen, der dem zusätzlichen Feld entspricht, und Durchsuchen einer zweiten Tabelle basierend auf dem NHF, um einen Protokolltyp zu erlangen, der dem NHF entspricht;
wenn der Protokolltyp, der dem zusätzlichen Feld entspricht, in der ersten Tabelle vorliegt, Erlangen eines Protokolltyps des zweiten Paket-Headers basierend auf dem Protokolltyp, der dem zusätzlichen Feld entspricht; und
wenn der Protokolltyp, der dem zusätzlichen Feld entspricht, in der ersten Tabelle nicht vorliegt, Erlangen des Protokolltyps des zweiten Paket-Headers basierend auf dem Protokolltyp, der dem NHF entspricht.

9. Vorrichtung gemäß Anspruch 8, wobei die Konfiguration des ersten Paket-Headers ferner einen Versatz des ersten Paket-Headers umfasst und die ersten Konfigurationsinformationen ferner Längeninformationen des ersten Paket-Headers umfassen;
und
wobei die Erlangungseinheit ferner dazu konfiguriert ist, einen Versatz des zweiten Paket-Headers basierend auf den Längeninformationen des ersten Paket-Headers und dem Versatz des ersten Paket-Headers zu erlangen.

10. Vorrichtung gemäß 9, wobei
die Erlangungseinheit ferner zu Folgendem konfiguriert ist:
wenn der erste Paket-Header ein Paket-Header erster Ebene des Pakets ist, Erlangen der Konfiguration des ersten Paket-Headers basierend auf einer physischen Portnummer, die zum Empfangen des Pakets verwendet wird; und
wenn der erste Paket-Header nicht der Paket-Header erster Ebene des Pakets ist, Erlangen von zweiten Konfigurationsinformationen basierend auf einer Konfiguration eines Paket-Headers vorheriger Ebene des ersten Paket-Headers,
wobei die zweiten Konfigurationsinformationen ein NHF des Paket-Headers vorheriger Ebene, ein zusätzliches Feld des Paket-Headers vorheriger Ebene und Längeninformationen des Paket-Headers vorheriger Ebene umfassen und das zusätzliche Feld verwendet wird, um die Konfiguration des ersten Paket-Headers zu bestimmen und die Konfiguration des ersten Paket-Headers basierend auf den zweiten Konfigurationsinformationen zu erlangen.

11. Vorrichtung gemäß Anspruch 9 oder 10, wobei die Erlangungseinheit ferner zu Folgendem konfiguriert ist:
Durchsuchen einer dritten Tabelle basierend auf dem Protokolltyp des ersten Paket-Headers, um erste Ortsinformationen zu erlangen, wobei die ersten Ortsinformationen einen Ort des zusätzlichen Feldes in dem ersten Paket-Header anzeigen, und Extrahieren des zusätzlichen Feldes aus dem ersten Paket-Header basierend auf den ersten Ortsinformationen;
die Erlangungseinheit ferner zu Folgendem konfiguriert ist:
Durchsuchen einer vierten Tabelle basierend auf dem Protokolltyp des ersten Paket-Headers, um zweite Ortsinformationen zu erlangen, wobei die zweiten Ortsinformationen einen Ort des NHF in dem ersten Paket-Header anzeigen, und Extrahieren des NHF aus dem ersten Paket-Header basierend auf den zweiten Ortsinformationen; und
die Erlangungseinheit ferner zu Folgendem konfiguriert ist:
Durchsuchen einer fünften Tabelle basierend auf dem Protokolltyp des ersten Paket-Headers, um dritte Ortsinformationen zu erlangen, wobei die dritten Ortsinformationen einen Ort von Längenberechnungskonfigurationsinformationen in dem ersten Paket-Header anzeigen, und Berechnen, um die Längeninformationen des ersten Paket-Headers basierend auf den Längenberechnungskonfigurationsinformationen zu erlangen.

12. Vorrichtung gemäß einem der Ansprüche 8 bis 11, wobei wobei die Erlangungseinheit ferner dazu konfiguriert ist, eine ternäre inhaltsadressierbare Speicherdurchsuchung, TCAM, in der zweiten Tabelle basierend auf dem NHF durchzuführen, um den Protokolltyp zu erlangen, der dem NHF entspricht.

13. Vorrichtung gemäß Anspruch 12, wobei
die Erlangungseinheit ferner zu Folgendem konfiguriert ist:
Generieren, basierend auf dem NHF, eines Suchschlüssels, der dem NHF entspricht, und Bestimmen eines Eintrags in der zweiten Tabelle, der dem Schlüssel entspricht;
wenn der Eintrag, der dem Schlüssel entspricht, in der zweiten Tabelle vorliegt, Verwenden eines Protokolltyps, der durch den Eintrag angezeigt wird, als der Protokolltyp, der dem NHF entspricht; und
wenn eine Vielzahl von Einträgen, die dem Schlüssel entspricht, in der zweiten Tabelle vorliegt, Bestimmen eines Zieleintrags aus der Vielzahl von Einträgen durch Prioritätsadressierung und Verwenden eines Protokolltyps, der durch den Zieleintrag angezeigt wird, als der Protokolltyp, der dem NHF entspricht.

14. Vorrichtung gemäß einem der Ansprüche 8 bis 13, wobei die Vorrichtung ferner eine Generierungseinheit umfasst;
wobei die Generierungseinheit dazu konfiguriert ist, einen Paketdeskriptor, PHD, des Pakets basierend auf der Konfiguration des ersten Paket-Headers und einer Konfiguration des zweiten Paket-Headers zu generieren, wobei die Konfiguration des zweiten Paket-Headers den Protokolltyp und den Versatz umfasst, die zu dem zweiten Paket-Header gehören.

## Revendications

1. Procédé d'analyse de paquets, dans lequel le procédé comprend :
la réception d'un paquet, dans lequel le paquet comprend au moins un premier en-tête de paquet et un second en-tête de paquet, et le second en-tête de paquet est un en-tête de paquet de niveau suivant du premier en-tête de paquet ;
l'obtention d'une configuration du premier en-tête de paquet, dans lequel la configuration du premier en-tête de paquet comprend un type de protocole du premier en-tête de paquet ;
l'obtention des premières informations de configuration à partir du premier en-tête de paquet sur la base de la configuration du premier en-tête de paquet, dans lequel les premières informations de configuration comprennent un champ d'en-tête de paquet suivant, NHF, et un champ supplémentaire du premier en-tête de paquet ;
la recherche d'une première table sur la base du champ supplémentaire pour obtenir un type de protocole correspondant au champ supplémentaire, et la recherche d'une deuxième table sur la base du NHF pour obtenir un type de protocole correspondant au NHF ;
lorsqu'il existe le type de protocole correspondant au champ supplémentaire dans la première table, l'obtention d'un type de protocole du second en-tête de paquet sur la base du type de protocole correspondant au champ supplémentaire ; et
lorsqu'il n'existe pas de type de protocole correspondant au champ supplémentaire dans la première table, l'obtention du type de protocole du second en-tête de paquet sur la base du type de protocole correspondant au NHF.

2. Procédé selon la revendication 1, dans lequel la configuration du premier en-tête de paquet comprend également un décalage du premier en-tête de paquet, et les premières informations de configuration comprennent également des informations de longueur du premier en-tête de paquet ; et
le procédé comprend également :
l'obtention d'un décalage du second en-tête de paquet sur la base des informations de longueur du premier en-tête de paquet et du décalage du premier en-tête de paquet.

3. Procédé selon la revendication 2, dans lequel l'obtention d'une configuration du premier en-tête de paquet comprend :
lorsque le premier en-tête de paquet est un en-tête de paquet de premier niveau du paquet, l'obtention de la configuration du premier en-tête de paquet sur la base d'un numéro de port physique utilisé pour recevoir le paquet ; et
lorsque le premier en-tête de paquet n'est pas l'en-tête de paquet de premier niveau du paquet, l'obtention des secondes informations de configuration sur la base d'une configuration d'un en-tête de paquet de niveau précédent du premier en-tête de paquet, dans lequel les secondes informations de configuration comprennent un NHF de l'en-tête de paquet de niveau précédent, un champ supplémentaire de l'en-tête de paquet de niveau précédent et des informations de longueur de l'en-tête de paquet de niveau précédent, et le champ supplémentaire est utilisé pour déterminer la configuration du premier en-tête de paquet et obtenir la configuration du premier en-tête de paquet sur la base des secondes informations de configuration.

4. Procédé selon la revendication 2 ou 3, dans lequel l'obtention de premières informations de configuration basées sur la configuration du premier en-tête de paquet comprend :
la recherche d'une troisième table sur la base du type de protocole du premier en-tête de paquet pour obtenir des premières informations d'emplacement, dans lequel les premières informations d'emplacement indiquent un emplacement du champ supplémentaire dans le premier en-tête de paquet, et l'extraction du champ supplémentaire du premier en-tête de paquet sur la base des premières informations d'emplacement ;
la recherche d'une quatrième table sur la base du type de protocole du premier en-tête de paquet pour obtenir les deuxièmes informations d'emplacement, dans lequel les deuxièmes informations d'emplacement indiquent un emplacement du NHF dans le premier en-tête de paquet, et l'extraction du NHF du premier en-tête de paquet sur la base des deuxièmes informations d'emplacement ; et
la recherche d'une cinquième table sur la base du type de protocole du premier en-tête de paquet pour obtenir des troisièmes informations d'emplacement, dans lequel les troisièmes informations d'emplacement indiquent un emplacement d'informations de configuration de calcul de longueur dans le premier en-tête de paquet, et le calcul pour obtenir les informations de longueur du premier en-tête de paquet sur la base des informations de configuration de calcul de longueur.

5. Procédé selon l'une quelconque des revendications 1 à 4, dans lequel la recherche d'une deuxième table basée sur le NHF pour obtenir un type de protocole correspondant au NHF comprend :
la réalisation d'une mémoire adressable à contenu ternaire, TCAM, en recherchant sur la deuxième table basée sur le NHF pour obtenir le type de protocole correspondant au NHF.

6. Procédé selon la revendication 5, dans lequel la réalisation de la mémoire adressable à contenu ternaire, TCAM, en recherchant sur la deuxième table basée sur le NHF pour obtenir le type de protocole correspondant au NHF comprend :
la génération, sur la base du NHF, d'une clé de recherche correspondant au NHF ;
l'obtention d'une entrée correspondant à la clé dans la deuxième table ;
lorsque l'entrée correspondant à la clé dans la deuxième table existe, l'utilisation d'un type de protocole indiqué par l'entrée comme type de protocole correspondant au NHF ; et
lorsqu'il existe une pluralité d'entrées correspondant à la clé dans la deuxième table, la détermination d'une entrée cible parmi la pluralité d'entrées par adressage prioritaire, et
l'utilisation d'un type de protocole indiqué par l'entrée cible comme type de protocole correspondant au NHF.

7. Procédé selon l'une quelconque des revendications 1 à 6, dans lequel le procédé comprend également :
la génération d'un descripteur de paquet, PHD, du paquet sur la base de la configuration du premier en-tête de paquet et d'une configuration du second en-tête de paquet, dans lequel la configuration du second en-tête de paquet comprend le type de protocole et le décalage qui sont ceux du second en-tête de paquet.

8. Appareil d'analyse de paquets, dans lequel l'appareil comprend une unité de réception et une unité d'obtention ;
l'unité de réception est configurée pour recevoir un paquet, dans lequel le paquet comprend au moins un premier en-tête de paquet et un second en-tête de paquet, et le second en-tête de paquet est un en-tête de paquet de niveau suivant du premier en-tête de paquet ;
l'unité d'obtention est configurée pour obtenir une configuration du premier en-tête de paquet, dans lequel la configuration du premier en-tête de paquet comprend un type de protocole du premier en-tête de paquet ;
l'unité d'obtention est également configurée pour obtenir des premières informations de configuration à partir du premier en-tête de paquet sur la base de la configuration du premier en-tête de paquet, dans lequel les premières informations de configuration comprennent un champ d'en-tête de paquet suivant, NHF, et un champ supplémentaire du premier en-tête de paquet ;
l'unité d'obtention est également configurée pour : rechercher une première table sur la base du champ supplémentaire pour obtenir un type de protocole correspondant au champ supplémentaire, et rechercher une deuxième table sur la base du NHF pour obtenir un type de protocole correspondant au NHF ; lorsqu'il existe le type de protocole correspondant au champ supplémentaire dans la première table, obtenir un type de protocole du second en-tête de paquet sur la base du type de protocole correspondant au champ supplémentaire ; et
lorsqu'il n'existe pas de type de protocole correspondant au champ supplémentaire dans la première table, obtenir le type de protocole du second en-tête de paquet sur la base du type de protocole correspondant au NHF.

9. Appareil selon la revendication 8, dans lequel la configuration du premier en-tête de paquet comprend également un décalage du premier en-tête de paquet, et les premières informations de configuration comprennent également des informations de longueur du premier en-tête de paquet ; et l'unité d'obtention est également configurée pour obtenir un décalage du second en-tête de paquet sur la base des informations de longueur du premier en-tête de paquet et du décalage du premier en-tête de paquet.

10. Appareil selon la revendication 9, dans lequel l'unité d'obtention est également configurée pour : lorsque le premier en-tête de paquet est un en-tête de paquet de premier niveau du paquet, obtenir la configuration du premier en-tête de paquet sur la base d'un numéro de port physique utilisé pour recevoir le paquet ; et
lorsque le premier en-tête de paquet n'est pas l'en-tête de paquet de premier niveau du paquet, obtenir des secondes informations de configuration sur la base d'une configuration d'un en-tête de paquet de niveau précédent du premier en-tête de paquet, dans lequel les secondes informations de configuration comprennent un NHF de l'en-tête de paquet de niveau précédent, un champ supplémentaire de l'en-tête de paquet de niveau précédent et des informations de longueur de l'en-tête de paquet de niveau précédent, et le champ supplémentaire est utilisé pour déterminer la configuration du premier en-tête de paquet et obtenir la configuration du premier en-tête de paquet sur la base des secondes informations de configuration.

11. Appareil selon la revendication 9 ou 10, dans lequel
l'unité d'obtention est également configurée pour : rechercher une troisième table sur la base du type de protocole du premier en-tête de paquet pour obtenir des premières informations d'emplacement, dans lequel les premières informations d'emplacement indiquent un emplacement du champ supplémentaire dans le premier en-tête de paquet, et extraire le champ supplémentaire du premier en-tête de paquet sur la base des premières informations d'emplacement ;
l'unité d'obtention est également configurée pour : rechercher une quatrième table sur la base du type de protocole du premier en-tête de paquet pour obtenir des deuxièmes informations d'emplacement, dans lequel les deuxièmes informations d'emplacement indiquent un emplacement du NHF dans le premier en-tête de paquet, et extraire le NHF du premier en-tête de paquet sur la base des deuxièmes informations d'emplacement ; et
l'unité d'obtention est également configurée pour : rechercher une cinquième table sur la base du type de protocole du premier en-tête de paquet pour obtenir des troisièmes informations d'emplacement, dans lequel les troisièmes informations d'emplacement indiquent un emplacement d'informations de configuration de calcul de longueur dans le premier en-tête de paquet, et calculer pour obtenir les informations de longueur du premier en-tête de paquet sur la base des informations de configuration de calcul de longueur.

12. Appareil selon l'une quelconque des revendications 8 à 11, dans lequel
l'unité d'obtention est également configurée pour réaliser une mémoire adressable à contenu ternaire, TCAM, en recherchant sur la deuxième table basée sur le NHF pour obtenir le type de protocole correspondant au NHF.

13. Appareil selon la revendication 12, dans lequel
l'unité d'obtention est également configurée pour : générer, sur la base du NHF, une clé de recherche correspondant au NHF, et déterminer une entrée correspondant à la clé dans la deuxième table ;
lorsque l'entrée correspondant à la clé dans la deuxième table existe, utiliser un type de protocole indiqué par l'entrée comme type de protocole correspondant au NHF ; et
lorsqu'il existe une pluralité d'entrées correspondant à la clé dans la deuxième table, déterminer une entrée cible parmi la pluralité d'entrées par adressage prioritaire, et utiliser un type de protocole indiqué par l'entrée cible comme type de protocole correspondant au NHF.

14. Appareil selon l'une quelconque des revendications 8 à 13, dans lequel l'appareil comprend également une unité de génération :
l'unité de génération est également configurée pour générer un descripteur de paquet, PHD, du paquet sur la base de la configuration du premier en-tête de paquet et d'une configuration du second en-tête de paquet, dans lequel la configuration du second en-tête de paquet comprend le type de protocole et le décalage qui sont ceux du second en-tête de paquet.
